# EUROPÄISCHE PATENTSCHRIFT

(11) **EP 1 571 952 B1**
(45) Veröffentlichungstag und Bekanntmachung des Hinweises auf die Patenterteilung: **06.06.2007**
(21) Anmeldenummer: 03773675.8
(22) Anmeldetag: 30.10.2003
(51) Int. Cl.: A47J 31/40, B01F 7/26, B01F 15/00

(54) **MISCHEINRICHTUNG**
MIXING DEVICE
DISPOSITIF MELANGEUR

(30) Priorität: 19.12.2002 DE 10260040
(43) Veröffentlichungstag der Anmeldung: 14.09.2005
(73) Patentinhaber: Braun GmbH, 61476 Kronberg (DE)
(72) Erfinder: REBORDOSA, Antonio, E-08272 Sant Fruitos de Bages (ES); FONT, Vicenc, E-08013 Barcelona (ES); CORONADO, Juan Carlos, E-08042 Barcelona (ES); ROMAN, José, Luis, E-08960 Sant Just Desvern (ES)
(86) Internationale Anmeldenummer: PCT/EP2003/012026
(87) Internationale Veröffentlichungsnummer: WO 2004/056246

(56) Entgegenhaltungen:
- EP-A- 1 210 973
- DE-A- 3 838 683
- DE-U- 20 006 115
- US-A- 3 588 055
- US-A- 4 175 873

## Beschreibung

Die Erfindung bezieht sich auf eine Mischeinrichtung zum Mischen eines pulverförmigen löslichen Extrakts von insbesondere Kaffee mit insbesondere heißem Wasser zum Aufbereiten eines Getränks, mit einer etwa trichterartigen Mischkammer, in die der pulverförmige Extrakt und über einen Heißwasserzulauf das heiße Wasser einfüllbar und mischbar sind und mit einem Auslaß im unteren Bereich der Mischkammer, der zu einer Cremakammer führt, in der ein um eine Drehachse drehbar antreibbarer Cremarotor und in deren Bodenbereich eine Auslaßöffnung angeordnet sind.

Bei einer derartigen bekannter Mischeinrichtung (siehe z.B. DE 38387683 A1) wird der pulverförmige lösliche Kaffee-Extrakt und ggf. Milchpulver in die trichterartige Mischkammer eingebracht und durch das über den Heißwasserzulauf einströmende heiße Wasser aufgelöst. Zum Mischen des heißen Wassers mit dem Kaffee-Extrakt ist der Heißwasserzulauf etwa rechtwinklig zur Drehachse des Cremarotors und etwa tangential zur Seitenwand der Mischkammer in die Mischkammer gerichtet. Damit eine umlaufende Strömung in der Mischkammer entsteht, muß das heiße Wasser unter einem bestimmten Mindestdruck in die Mischkammer einströmen. Dazu wird entweder ein direkter Anschluß der Heizeinrichtung zum Aufheizen des Wassers an eine unter Druck stehende Wasserleitung benötigt, wobei dieser Druck sich bis zum Einströmen des heißen Wassers in die Mischkammer fortsetzt. Damit ist ein Betrieb der Mischeinrichtung nur in unmittelbarer Nähe einer Zapfstelle eines Wassernetzes betreibbar.

Um die Notwendigkeit einer Zapfstelle zu vermeiden, kann in dem Wasserzulauf zur Mischeinrichtung auch eine den notwendigen Druck erzeugende Pumpe angeordnet sein, was die Mischeinrichtung aufwendig und teuer macht.

Aufgabe der Erfindung ist es daher eine Mischeinrichtung der eingangs genannten Art zu schaffen, die örtlich unabhängig von einer Zapfstelle eines Wassernetzes betreibbar ist, einen einfachen Aufbau aufweist und ein Mischung hoher Qualität des pulverförmigen löslichen Extrakts mit heißem Wasser sowie eine gut geschäumte Crema erzeugt.

Diese Aufgabe wird erfindungsgemäß durch die Merkmale des kennzeichnenden Teils von Anspruch 1 gelöst.

Durch diese Ausbildung kann das heiße Wasser ohne das Erfordernis eines Drucks in die Mischkammer laufen oder tropfen und wird dort durch die Rotationsbewegung des Mischrotors in feine Tropfen aufgelöst etwa radial gegen die Seitenwand der Mischkammer geschleudert. Dort treffen die Tropfen auf den pulverförmigen löslichen Extrakt, lösen diesen auf und fließen dann zum Boden der Mischkammer und durch den Auslaß in die Cremakammer. Durch den Cremarotor wird diese gemischte Flüssigkeit ebenfalls in feine Tropfen aufgelöst, radial zur Seitenwand der Cremakammer geschleudert und dadurch innig mit kleinsten Luftblasen durchsetzt, so daß eine besonders gut aufgeschäumte Crema entsteht. Das durch die Auslaßöffnung ausfließende Getränk wird dann z.B. von einem Trinkgefäß aufgenommen und besitzt eine gut aufgeschäumte Crema auf seiner Oberfläche. Die Mischkammer sowie der Mischrotor sind so angeordnet, daß beim Einfließen von Wasser der Mischrotor von diesem benetzt bzw. auch ein-/untergetaucht wird. Dadurch wird dann das Wasser in der Mischkammer verwirbelt und vermischt sich mit dem Pulver. Die Flüssigkeit wird direkt auf die Mischscheibe gebracht, was eine besonders schnelle und innige Vermischung hervorruft.

Zur Reduzierung der Baugröße können der Cremarotor und der Mischrotor um eine gemeinsame Drehachse drehbar antreibbar sein, die sich von der Mischkammer in die Cremakammer erstreckt, wobei nur ein einziger Drehantrieb erforderlich ist, wenn der Mischrotor und der Cremarotor in einem Abstand zueinander auf einer Antriebswelle eines gemeinsamen Antriebsmotors drehfest angeordnet sind (Anspruch 2).

Der Auslaß zur Cremakammer ist so klein bemessen, daß die Flüssigkeit nur langsam die Mischkammer verläßt. Dies führt zu guter Vermischung. Der Ausslaß kann aber auch mit einem elektrisch betätigbaren Ventil versehen sein, das erst nach guter Durchmischung den Weg zur Cremakammer freigibt.

Der Antriebsmotor ist insbesondere ein Elektromotor, der im Bereich unter dem Boden der Cremakammer angeordnet ist (Anspruch 4), so daß ein Befüllen der Mischkammer mit Wasser und löslichem Extrakt ungehindert von der Oberseite der Mischkammer her erfolgen kann.

Sind der Mischrotor und/oder der Cremarotor etwa scheibenartig, insbesondere kreisscheibenartig ausgebildet (Anspruch 5), so wird die auf die Oberfläche des rotierenden Mischrotors oder Cremarotors auftreffende Flüssigkeit durch die Fliehkraft als dünner Film radial nach außen geschleudert, wobei dieser Film dann in feine Tropfen aufreißt, die mit hoher Geschwindigkeit auf die Seitenwände der Mischkammer und der Cremakammer auftreffen.

Dies führt zu einer guten Mischqualität in der Mischkammer und einer hohen Luftblasendurchsetzung in der Cremakammer. Dadurch wird auch bei kleinen Getränkemengen eine gute Durchmischung gewährleistet.

Vorzugsweise besitzt die Mischkammer eine Zuführöffnung an ihrer Oberseite, durch die von dem Heißwasserzulauf heißes Wasser in die Mischkammer einfüllbar ist (Anspruch 6).

In einfacher Weise können Mischrotor und Cremarotor gemeinsam angetrieben werden, wenn die Drehachse von Mischrotor und Cremarotor sich etwa koaxial zum Auslaß erstreckt und somit auch keine zusätzliche Durchführöffnung für die Antriebswelle benötigt wird (Anspruch 7).

Befindet sich die Ebene des Mischrotors in dem etwa konischen Bodenbereich der Mischkammer (Anspruch 8), so werden die auf diesen konischen Bereich mit hoher Geschwindigkeit auftreffenden Wassertropfen zur Oberseite der Mischkammer hin umgelenkt und fallen von da in einem Bogen radial nach innen und nochmals auf den Mischrotor, so daß ein Mischkreislauf entsteht, der ein besonders gutes Durchmischen von Wasser und löslichem Extrakt gewährleistet. Dieser Mischkreislauf sorgt auch dafür, daß sich nicht Partikel des löslichen Extrakts an den Wänden der Mischkammer festsetzten können sondern von der Strömung der Flüssigkeit abgespült werden. Damit wird die Mischkammer sauber gehalten.

Zur gleichmäßigen Verteilung des Wassers in der Mischkammer kann die Mündung des Heißwasserzulaufs etwa koaxial zur Drehachse gerichtet sein (Anspruch 9).

Ist der Auslaß von einem Ventil verschließbar (Anspruch 10), so kann vor einem Weiterleiten der Mischflüssigkeit in die Cremakammer zunächst ein gutes Durchmischen der Flüssigkeit erfolgen.

Keine besonders bewegbar antreibbaren Ventilteile sind erforderlich, wenn der Cremarotor in nicht drehendem Zustand etwa becherförmig ausgebildet ist und mit seinem radial umlaufenden Rand den Auslaß umschließend mit elastischer Vorspannung an der Trennwand zwischen Mischkammer und Cremakammer dichtend in Anlage ist und in drehendem Zustand unter Fliehkraftwirkung eine etwa ebene Form annimmt (Anspruch 11).

Zur separaten Cremaerzeugung Kann dabei auf der dem Auslaß abgewandten Seite des Cremarotors ein zweiter Cremarotor auf der Antriebswelle drehfest angeordnet sein, der sich scheibenartig etwa radial erstreckt und vorzugsweise einen größeren Durchmesser besitzt als der erste Cremarotor (Anspruch 12).

Eine andere Möglichkeit zur Bildung eines Ventils ohne besonders bewegbar antreibbare Ventilteile besteht darin, daß der Mischrotor in nicht drehendem Zustand etwa becherförmig ausgebildet ist und mit seinem radial umlaufenden Rand den Auslaß umschließend mit elastischer Vorspannung am Boden der Mischkammer dichtend in Anlage ist und im drehenden Zustand unter Fliehkraftwirkung eine etwa ebene Form annimmt (Anspruch 13).

Damit in nicht rotierendem Zustand das Ventil sicher geschlossen ist und das Wasser zunächst in die Mischkammer eingefüllt werden kann, ohne sofort in die Cremakammer weiterzulaufen, kann der Cremarotor und/oder der Mischrotor einen ringförmigen Dichtwust oder eine ringförmige Dichtlippe an seinem radial umlaufenden Rand besitzen (Anspruch 14). Ausführungsbeispiele der Erfindung sind in der Zeichnung dargestellt und werden im folgenden näher beschrieben. Es zeigen:
- Fig. 1: einen Querschnitt eines ersten Ausführungsbeispiels einer Mischeinrichtung,
- Fig. 2: die Mischeinrichtung nach Fig. 1 mit dargestellten Strömungswegen der Mischflüssigkeit,
- Fig. 3: eine Querschnitt eines zweiten Ausführungsbeispiels einer Mischeinrichtung,
- Fig. 4: die Mischeinrichtung nach Fig. 3 mit gefüllter Mischkammer und verschlossenem Auslaß der Mischkammer,
- Fig. 5: die Mischeinrichtung nach Fig. 3 mit geöffnetem Auslaß der Mischkammer,
- Fig. 6: einen Querschnitt des nicht drehbar angetriebenen Cremarotors der Mischeinrichtung nach Fig. 3,
- Fig. 7: einen Querschnitt des drehbar angetriebenen Cremarotors der Mischeinrichtung nach Fig. 3.

Die in den dargestellten Mischeinrichtungen zum Mischen eines pulverförmigen löslichen Extrakts von Kaffee und ggf. auch Milch mit heißem Wasser zum Aufbereiten von Kaffee besitzen eine Mischkammer 1, die in ihrem unteren Bodenbereich 2 konisch als Trichter ausgebildet ist. An der tiefsten Stelle des Bodenbereichs 2 ist ein durchgehender Auslaß 3 ausgebildet, der zu einer unter der Mischkammer 1 liegenden Cremakammer 4 führt. Der Bodenbereich der Cremakammer 4 ist geneigt ausgebildet, wobei an der tiefsten Stelle des Bodenbereichs 6 eine Auslaßöffnung 6 nach außen führt.

Die Mischkammer 1 ist nach oben hin offen und besitzt an ihrem radial umlaufenden Öffnungsrand einen etwa radial nach innen gerichteten umlaufenden Kragen 7. Die zentrische Öffnung des Kragens 7 bildet eine Zuführöffnung 8 der Mischkammer 1, durch die zunächst der pulverförmige löslich Extrakt und danach von einem Heißwasserzulauf 9 heißes Wasser in die Mischkammer 1 eingefüllt wird.

Unterhalb des Bodens 13 der Cremakammer 4 ist in einer Motorkammer 10 ein Elektromotor 11 angeordnet, dessen Antriebswelle 12 durch eine Durchführöffnung 14 im Boden 13 dicht hindurchgeführt ist, die die Cremakammer 4 und den Auslaß 3 koaxial durchragt und mit ihrem freien Ende etwa in halber Höhe des konischen Bodenbereichs 2 der Mischkammer 1 endet.

An einem radial in den Auslaß 3 ragenden Arm 15 ist eine Lagerbuchse 16 angeordnet, in der die Antriebswelle 12 drehbar gelagert ist.

Das freie Ende der Antriebswelle 12 trägt in der Mischkammer 1 drehfest einen radial sich erstreckenden kreisscheibenartigen Mischrotor 17:

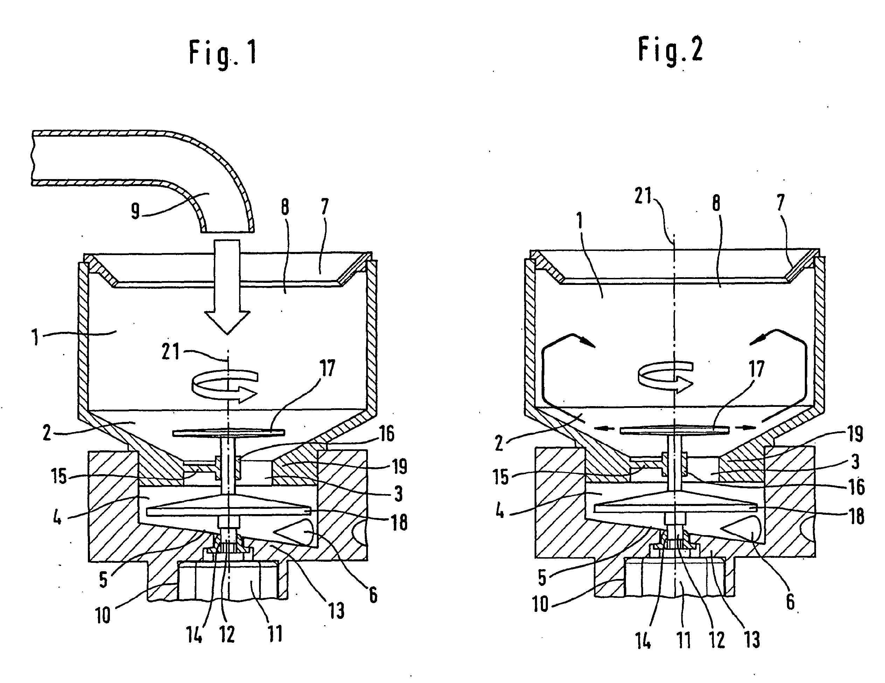

In der Cremakammer 4 ist ebenfalls drehfest auf der Antriebswelle 12 ein Cremarotor 18, 18' angeordnet. Der Cremarotor 18 in dem Ausführungsbeispiel der Figuren 1 und 2 ist ebenfalls kreisscheibenartig radial sich erstreckend ausgebildet, wobei die der Mischkammer 1 zugewandte Oberfläche des Cremarotors 18 ausgehend von der Antriebswelle 12 zu ihrem radial umlaufenden Rand hin sich von der Mischkammer 1 entfernend geneigt ist.

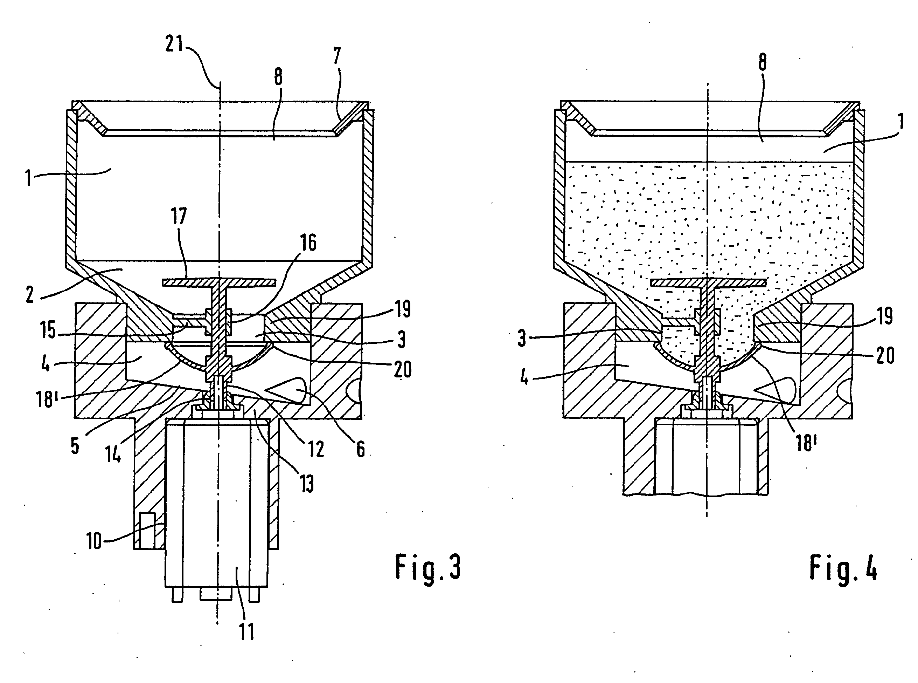

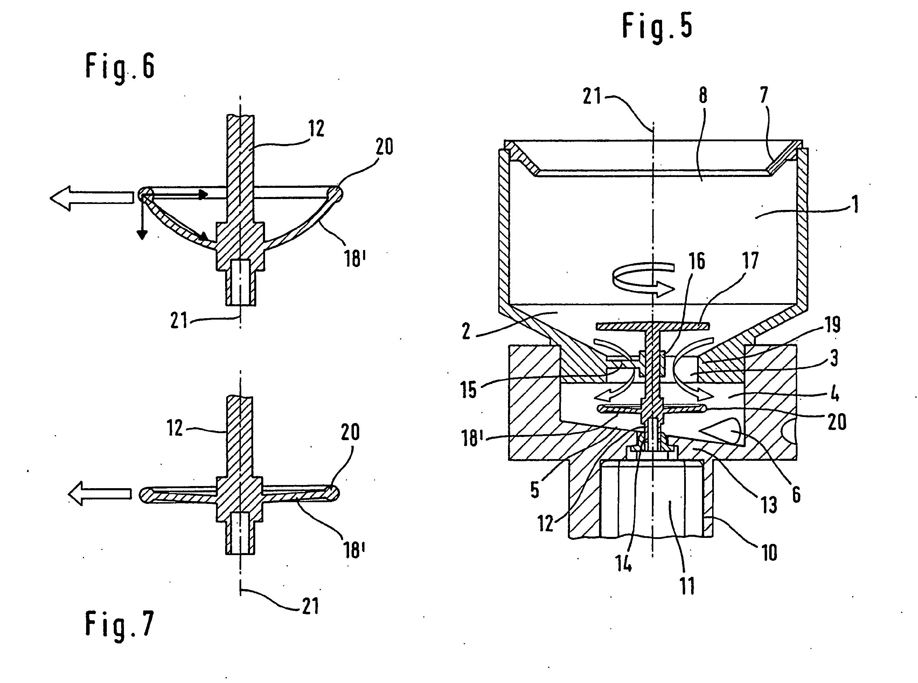

Bei dem Ausführungsbeispiel der Figuren 3 bis 7 ist der Cremarotor 18' aus einem elastischen Werkstoff ausgebildet und mit einer ihn becherförmig verformenden Vorspannung versehen. In dem in den Figuren 3, 4 und 6 dargestellten nicht drehenden Zustand des Cremarotors 18' wölbt dieser sich becherförmig mit seinem radial umlaufenden Rand zur Trennwand 19 zwischen Mischkammer 1 und Cremarotor 4 hin und liegt unter Vorspannung dichtend mit einem an dem radial umlaufenden Rand angeformten Dichtwulst 20 an der Trennwand 19 den Auslaß 3 umschließend an. Durch diesen verschlossenen Auslaß 3 kann die Mischkammer mit dem pulverförmigen löslichen Extrakt und dem heißen Wasser gefüllt werden, ohne daß diese Flüssigkeit durch den Auslaß 3 in die Cremakammer 4 auslaufen kann. Durch einen dann folgenden Drehantrieb von Mischrotor 17 und Cremarotor 18' um eine Drehachse 21 durch den Elektromotor 11 führen die auf den Cremarotor 18' wirkenden Fliehkräfte (Fig. 6) zu einer elastischen Verformung des Cremarotors 18', bis dieser eine etwa gestreckte Scheibenform annimmt (Figuren 7 und 8). Damit ist der Auslaß 3 geöffnet und die durch den drehenden Mischrotor 17 in der Mischkammer 1 gemischte Mischflüssigkeit kann auf den Cremarotor 18' fließen. Dort wird die Mischflüssigkeit auf dem Cremarotor 18' einen dünnen Flüssigkeitsfilm bildend radial nach außen geschleudert und derart mit feinen Luftblasen durchsetzt, daß sich eine gut aufgeschäumte Crema bildet. Zusammen mit der Mischflüssigkeit Kaffee fließt die Crema durch die Auslaßöffnung 6 in ein Trinkgefäß.

Nach Beendigung des Drehantriebs nimmt der Cremarotor 18' aufgrund seiner Vorspannung wieder seine in den Figuren 3, 4 und 6 dargestellte Form an und verschließt den Auslaß 3 wieder.

Bei dem Ausführungsbeispiel der Figuren 1 und 2 wird nach dem Einfüllen des pulverförmigen löslichen Extrakts das heiße Wasser eingefüllt und gleichzeitig der Drehantrieb von Antriebswelle, Mischrotor 17 und Cremarotor 18 um eine Drehachse 21 gestartet. Das auf die Oberfläche des Mischrotors 17 auftreffende heiße Wasser wird auf dem Mischrotor 17 einen dünnen Wasserfilm bildend radial nach außen geschleudert, wobei der Wasserfilm nach Verlassen des Mischrotors 17 zu kleinen Wassertröpfchen zerreißt, die mit hoher Geschwindigkeit auf den pulverförmigen Extrakt und die Schräge des konischen Bodenbereichs 2 der Mischkammer 1 auftreffen. Dort werden sie, wie in Fig. 2 dargestellt, zu dem zylindrischen Bereich der Mischkammer 1 nach oben umgelenkt und fallen nach Aufbrauch ihrer kinetischen Energie radial nach innen und dann von oben wieder auf den Mischrotor 1. Dadurch, daß der größte Teil der Flüssigkeit diesen Kreislauf mehrmals durchführt und nur Teile der Flüssigkeit durch den Auslaß 3 auf den Cremarotor 18 fließen, kommt es zu einer sehr guten Durchmischung von Wasser und Extrakt sowie Auflösung des Extrakts. Bei der auf den Cremarotor 18 auftreffenden Mischflüssigkeit wird in gleicher Weise wie bei dem Ausführungsbeispiel der Figuren 3 bis 7 eine gut aufgeschäumte Crema erzeugt, die zusammen mit dem Kaffee über die Auslaßöffnung 6 in ein Trinkgefäß fließt.

Die Mischung der Flüssigkeit mit dem Extrakt erfolgt bei dem Ausführungsbeispiel der Figuren 3 bis 7 auf ähnliche Weise wie bei dem Ausführungsbeispiel der Figuren 1 und 2, indem die Flüssigkeit, die durch den Mischrotor 17 radial geschleudert wird, einen mehrmaligen Kreislauf, wie in Fig. 2 dargestellt, vollführt, ehe sie nach und nach durch den Auslaß 3 auf den Cremarotor 18' auftrifft.

## Patentansprüche

1. Mischeinrichtung zum Mischen eines pulverförmigen löslichen Extrakts von insbesondere Kaffee mit insbesondere heißem Wasser zum Aufbereiten eines Getränks, mit einer etwa trichterartigen Mischkammer (1), in die der pulverförmige Extrakt und über einen Heißwasserzulauf (9) das heiße Wasser einfüllbar und mischbar sind und mit einem Auslaß (3) im unteren Bereich (2) der Mischkammer (1), der zu einer Cremakammer (4) führt, in der ein um eine Drehachse (21) drehbar antreibbarer Cremarotor (18, 18') und in deren Bodenbereich eine Auslaßöffnung (6) angeordnet sind,
**dadurch gekennzeichnet,**
**daß** in der Mischkammer (1) ein um eine Drehachse (21) drehbar antreibbarer, etwa scheibenartiger, insbesondere kreisscheibenartiger Mischrotor (17) angeordnet ist, auf dessen Oberfläche der Heißwasserzulauf (9) gerichtet ist.

2. Mischeinrichtung nach Anspruch 1,
**dadurch gekennzeichnet,**
**daß** der Cremarotor (18, 18') und der Mischrotor (17) um eine gemeinsame Drehachse (21) drehbar antreibbar sind, die sich von der Mischkammer (1) in die Cremakammer (4) erstreckt.

3. Mischeinrichtung nach Anspruch 2
**dadurch gekennzeichnet,**
**daß** der Mischrotor (17) und der Cremarotor (18, 18') in einem Abstand zueinander auf einer Antriebswelle (21) eines gemeinsamen Antriebsmotors drehfest angeordnet sind.

4. Mischeinrichtung nach Anspruch 3,
**dadurch gekennzeichnet,**
**daß** der Antriebsmotor insbesondere ein Elektromotor (11) ist, der im Bereich unter dem Boden (13) der Cremakammer (4) angeordnet ist.

5. Mischeinrichtung nach einem der vorhergehenden Ansprüche,
**dadurch gekennzeichnet,**
**daß** der Cremarotor (18) etwa scheibenartig, insbesondere kreisscheibenartig ausgebildet ist.

6. Mischeinrichtung nach einem der vorhergehenden Ansprüche,
**dadurch gekennzeichnet,**
**daß** die Mischkammer (1) eine Zuführöffnung (8) an ihrer Oberseite besitzt, durch die von dem Heißwasserzulauf (9) heißes Wasser in die Mischkammer (1) einfüllbar ist.

7. Mischeinrichtung nach einem der vorhergehenden Ansprüche,
**dadurch gekennzeichnet,**
**daß** die Drehachse (21) von Mischrotor (17)und Cremarotor (18, 18') sich etwa koaxial zum Auslaß (3) erstreckt.

8. Mischeinrichtung nach einem der vorhergehenden Ansprüche,
**dadurch gekennzeichnet,**
**daß** die Ebene des Mischrotors (17) sich in dem etwa konischen Bodenbereich (2) der Mischkammer (1) befindet.

9. Mischeinrichtung nach einem der vorhergehenden Ansprüche,
**dadurch gekennzeichnet,**
**daß** die Mündung des Heißwasserzulaufs (9) etwa koaxial zur Drehachse (21) gerichtet ist.

10. Mischeinrichtung nach einem der vorhergehenden Ansprüche,
**dadurch gekennzeichnet,**
**daß** der Auslaß (3) von einem Ventil verschließbar ist.

11. Mischeinrichtung nach Anspruch 10,
**dadurch gekennzeichnet,**
**daß** der Cremarotor (18') in nicht drehendem Zustand etwa becherförmig ausgebildet ist und mit seinem radial umlaufenden Rand den Auslaß (3) umschließend mit elastischer Vorspannung an der Trennwand (19) zwischen Mischkammer (1) und Cremakammer (4) dichtend in Anlage ist und in drehendem Zustand unter Fliehkraftwirkung eine etwa ebene Form annimmt.

12. Mischeinrichtung nach Anspruch 11,
**dadurch gekennzeichnet,**
**daß** auf der dem Auslaß abgewandten Seite des Cremarotors ein zweiter Cremarotor auf der Antriebswelle drehfest angeordnet ist, der sich scheibenartig etwa radial erstreckt und vorzugsweise einen größeren Durchmesser besitzt als der erste Cremarotor.

13. Mischeinrichtung nach einem der Ansprüche 9 bis 12,
**dadurch gekennzeichnet,**
**daß** der Mischrotor in nicht drehendem Zustand etwa becherförmig ausgebildet ist und mit seinem radial umlaufenden Rand den Auslaß umschließend mit elastischer Vorspannung am Boden der Mischkammer dichtend in Anlage ist und im drehenden Zustand unter Fliehkraftwirkung eine etwa ebene Form annimmt.

14. Mischeinrichtung nach einem der Ansprüche 10 und 13,
**dadurch gekennzeichnet,**
**daß** der Cremarotor (18') und/oder der Mischrotor einen ringförmigen Dichtwust (20) oder eine ringförmige Dichtlippe an seinem radial umlaufenden Rand besitzt.

## Claims

1. Mixing arrangement for mixing a soluble pulverulent extract of, in particular, coffee with, in particular, hot water for preparing a drink, having an approximately funnel-like mixing chamber (1) into which the pulverulent extract and, via a hot-water supply (9), the hot water can be introduced and mixed, and having an outlet (3) in the bottom region (2) of the mixing chamber (1), this outlet leading to a crema chamber (4) which contains a crema rotor (18, 18'), which can be driven in a rotatable manner about an axis of rotation (21), and, in its base region, an outlet opening (6), **characterized in that** the mixing chamber (1) contains an approximately disc-like, in particular circular-disc-like mixing rotor (17) which can be driven in a rotatable manner about an axis of rotation (21) and has the hot-water supply (9) directed onto its surface.

2. Mixing arrangement according to Claim 1, **characterized in that** the crema rotor (18, 18') and the mixing rotar (17) can be driven in a rotatable manner about a common axis of rotation (21) which extends from the mixing chamber (1) into the crema chamber (4).

3. Mixing arrangement according to Claim 2, **characterized in that** the mixing rotor (17) and the crema rotor (18, 18') are spaced apart from one another in a rotationally fixed manner on a drive shaft (21) of a common drive motor.

4. Mixing arrangement according to Claim 3, **characterized in that** the drive motor is, in particular, an electric motor (11) arranged in the region beneath the base (13) of the crema chamber (4).

5. Mixing arrangement according to one of the preceding claims, **characterized in that** the crema rotor (18) is of approximately disc-like, in particular circular-disc-like, design.

6. Mixing arrangement according to one of the preceding claims, **characterized in that** the mixing chamber (1) has a feed opening (8) on its top side, through which the hot water from the hot-water supply (9) can be introduced into the mixing chamber (1).

7. Mixing arrangement according to one of the preceding claims, **characterized in that** the axis of rotation (21) of the mixing rotor (17) and crema rotor (18, 18') extends approximately coaxially in relation to the outlet (3).

8. Mixing arrangement according to one of the preceding claims, **characterized in that** the plane of the mixing rotor (17) is located in the approximately conical base region (2) of the mixing chamber (1).

9. Mixing arrangement according to one of the preceding claims, **characterized in that** the mouth of the hot-water supply (9) is directed approximately coaxially in relation to the axis of rotation (21).

10. Mixing arrangement according to one of the preceding claims, **characterized in that** the outlet (3) can be closed by a valve.

11. Mixing arrangement according to Claim 10, **characterized in that** the crema rotor (18'), in the non-rotating state, is of approximately cup-like form and has its radially encompassing periphery butting with sealing action and elastic pre-stressing, enclosing the outlet (3) in the process, against the partition wall (19) between the mixing chamber (1) and crema chamber (4) and, in a rotating state, assumes an approximately planar form under the action of centrifugal force.

12. Mixing arrangement according to Claim 11, **characterized in that**, on that side of the crema rotor which is directed away from the outlet, a second crema rotor is arranged in a rotationally fixed manner on the drive shaft, this second crema rotor extending approximately radially in a disc-like manner and preferably having a larger diameter than the first crema rotor.

13. Mixing arrangement according to one of Claims 9 to 12, **characterized in that** the mixing rotor, in the non-rotating state, is of approximately cup-like form and has its radially encompassing periphery butting with sealing action and elastic pre-stressing, enclosing the outlet in the process, against the base of the mixing chamber and, in a rotating state, assumes an approximately planar form under the action of centrifugal force.

14. Mixing arrangement according to either of Claims 10 and 13, **characterized in that** the crema rotor (18') and/or the mixing rotor have/has an annular sealing bead (20) or an annular sealing lip on the radially encompassing periphery.

## Revendications

1. Dispositif de mélange qui mélange un extrait soluble en poudre, en particulier de café, avec en particulier de l'eau chaude, pour préparer une boisson, et qui présente une chambre de mélange (1) sensiblement en forme d'entonnoir dans laquelle l'extrait en poudre peut être placé, de même que l'eau chaude par l'intermédiaire d'une amenée d'eau chaude (9), pour les mélanger, et une sortie (3) située dans la partie inférieure (2) de la chambre de mélange (1) qui conduit à une chambre à crème (4) dans laquelle est disposé un rotor à crème (18, 18') qui peut être entraîné en rotation autour d'un axe de rotation (21), une ouverture de sortie (6) étant prévue dans la partie du fond de la chambre à crème, **caractérisé en ce qu'**un rotor de mélange (17) qui peut être entraîné en rotation autour d'un axe de rotation (21) et sensiblement en forme de disque et en particulier en forme de disque circulaire à la surface duquel est dirigée l'amenée d'eau chaude (9) est disposé dans la chambre de mélange (1).

2. Dispositif de mélange selon la revendication 1, **caractérisé en ce que** le rotor à crème (18, 18') et le rotor de mélange (17) peuvent être entraînés en rotation autour d'un axe de rotation (21) commun qui s'étend depuis la chambre de mélange (1) jusque dans la chambre à crème (4).

3. Dispositif de mélange selon la revendication 2, **caractérisé en ce que** le rotor de mélange (17) et le rotor à crème (18, 18') sont disposés à rotation solidaire à distance l'un de l'autre sur l'arbre d'entraînement (21) d'un moteur d'entraînement commun.

4. Dispositif de mélange selon la revendication 3, **caractérisé en ce que** le moteur d'entraînement est en particulier un moteur électrique (11) qui est disposé dans la partie située en dessous du fond (13) de la chambre à crème (4).

5. Dispositif de mélange selon l'une quelconque des revendications précédentes, **caractérisé en ce que** le rotor à crème (18) est configuré en forme de disque et en particulier en forme de disque circulaire.

6. Dispositif de mélange selon l'une quelconque des revendications précédentes, **caractérisé en ce que** la chambre de mélange (1) présente sur son côté supérieur une ouverture d'amenée (8) par laquelle de l'eau chaude qui provient de l'amenée (9) d'eau chaude peut être introduite dans la chambre de mélange (1).

7. Dispositif de mélange selon l'une quelconque des revendications précédentes, **caractérisé en ce que** l'axe de rotation (21) du rotor de mélange (17) et du rotor à crème (18, 18') s'étend sensiblement coaxialement par rapport à la sortie (3).

8. Dispositif de mélange selon l'une quelconque des revendications précédentes, **caractérisé en ce que** le plan du rotor de mélange (17) est situé dans la partie de fond sensiblement conique (2) de la chambre de mélange (1).

9. Dispositif de mélange selon l'une quelconque des revendications précédentes, **caractérisé en ce que** l'embouchure de l'amenée d'eau chaude (9) est orientée sensiblement coaxialement par rapport à l'axe de rotation (21).

10. Dispositif de mélange selon l'une quelconque des revendications précédentes, **caractérisé en ce que** la sortie (3) peut être fermée par une soupape.

11. Dispositif de mélange selon la revendication 10, **caractérisé en ce que**, lorsqu'il ne tourne pas, le rotor à crème (18') est configuré sensiblement en forme de godet et est placé de manière étanche contre la paroi (19) qui sépare la chambre de mélange (1) et la chambre à crème (4) en entourant sous une précontrainte élastique la sortie (3) par son bord périphérique radial et **en ce que**, lorsqu'il tourne, il prend une forme sensiblement plane sous l'effet de la force centrifuge.

12. Dispositif de mélange selon la revendication 11, **caractérisé en ce qu'**un deuxième rotor à crème qui s'étend sensiblement radialement en forme de disque et dont le diamètre est de préférence plus grand que celui du premier rotor à crème est disposé à rotation solidaire sur l'arbre d'entraînement sur le côté du rotor à crème non tourné vers la sortie.

13. Dispositif de mélange selon l'une quelconque des revendications 9 à 12, **caractérisé en ce que**, lorsqu'il ne tourne pas, le rotor de mélange est configuré sensiblement en forme de godet et est placé de manière étanche contre le fond de la chambre de mélange en entourant sous une précontrainte élastique la sortie par son bord périphérique radial et **en ce que**, lorsqu'il tourne, il prend une forme sensiblement plane sous l'effet de la force centrifuge.

14. Dispositif de mélange selon l'une quelconque des revendications 10 et 13, **caractérisé en ce que** le rotor à crème (18') et/ou le rotor de mélange possèdent un bourrelet annulaire d'étanchéité (20) ou une lèvre annulaire d'étanchéité sur leur bord périphérique radial.
